# FASCICULE DE BREVET EUROPEEN

(11) **EP 3 455 023 B1**
(45) Date de publication et mention de la délivrance du brevet: **15.04.2020**
(21) Numéro de dépôt: 17722032.4
(22) Date de dépôt: 09.05.2017
(51) Int. Cl.: B23K 20/06, B23K 20/24, B23K 33/00, B23K 101/06

(54) **PROCEDE D'ASSEMBLAGE DE PIECES TUBULAIRES A FORTE EPAISSEUR PAR IMPULSION MAGNETIQUE**
VERFAHREN ZUM VERBINDEN VON SEHR DICKEN ROHRFÖRMIGEN TEILEN DURCH MAGNETISCHE IMPULSE
METHOD OF JOINING VERY THICK TUBULAR PARTS BY MAGNETIC PULSES

(30) Priorité: 10.05.2016 FR 1654167
(43) Date de publication de la demande: 20.03.2019
(73) Titulaire: ADM28 S.àr.l., 2453 Luxembourg (LU)
(72) Inventeur: SHRIBMAN, Victor, 5528601 KIRYAT ONO (IL)
(74) Mandataire: Ipside
(86) Numéro de dépôt international: PCT/EP2017/061022
(87) Numéro de publication internationale: WO 2017/194518

(56) Documents cités:
- WO-A1-2015/055626
- FR-A1- 3 026 038
- US-A1- 2014 124 075
- US-A1- 2015 328 712

## Description

### Domaine de l'invention

La présente invention s'inscrit dans le domaine de l'assemblage de pièces par impulsion magnétique. La présente invention porte sur un procédé d'assemblage de pièces tubulaires conformément au préambule de la revendication 1 (voir par exemple FR 3 026 038).

L'invention est notamment applicable aux pièces tubulaires à fortes épaisseurs.

### Etat de la technique

Le soudage par impulsion magnétique appartient au domaine des procédés de soudage par impact permettant la réalisation d'une liaison entre deux pièces métalliques par pression l'une contre l'autre au niveau d'une zone de recouvrement. Le principe d'un tel procédé de soudage par impulsion magnétique repose principalement sur l'impact à grande vitesse des pièces grâce à des forces électromagnétiques générées par une bobine.

De manière classique, un système pour mettre en oeuvre un tel procédé de soudage par impulsion magnétique comporte un ou plusieurs condensateurs relié(s) à une bobine pour créer un champ magnétique bref et intense. Le ou les condensateurs serve(nt) au stockage d'une grande quantité d'énergie électrique. Le champ magnétique intense créé est le résultat d'une décharge très rapide de cette énergie électrique dans la bobine.

Pour réaliser le soudage de deux pièces entre elles avec un tel procédé, lesdites deux pièces sont préalablement superposées l'une par rapport à l'autre, au moins sur une zone dite de recouvrement. La bobine est positionnée au niveau de cette zone de recouvrement. La pièce dénommée pièce externe est celle qui est positionnée proche de la bobine, sans être en contact avec celle-ci, et la pièce dénommée pièce interne est celle qui est la plus éloignée de la bobine. Une très grande quantité d'énergie électrique, préalablement stockée dans le ou les condensateurs, est subitement déchargée dans la bobine, sous la forme d'un courant variable de très forte intensité, en un temps très court. A titre d'exemple, certains systèmes peuvent atteindre quelques centaines de milliers d'ampères en quelques microsecondes. Le courant génère un champ magnétique variable entre la bobine et la pièce externe et induit des courants de Foucault dans cette pièce externe. Ces courants de Foucault associés au champ magnétique environnant développent dans la pièce externe des forces volumiques importantes appelées forces de Lorentz. Ces forces engendrent une forte accélération de la pièce externe en direction de la pièce interne. La vitesse de collision de la pièce externe sur la pièce interne peut s'élever à plusieurs centaines de m/s. Lorsque certaines conditions d'impact, notamment l'angle de collision et la vitesse de collision, sont réunies, cet impact génère d'une part un jet de matière qui va nettoyer la surface des deux pièces, et d'autre part une pression qui va rapprocher les atomes des matériaux des deux pièces les uns contre les autres de telle sorte que leurs forces de répulsion naturelles sont vaincues, résultant ainsi en une liaison métallique sans fusion. La paroi de la pièce externe est alors non seulement liée d'un point de vue métallurgique à la paroi de la pièce interne mais a subi également une déformation rémanente.

Cependant, un contact entre les deux pièces n'est pas une garantie de soudage.

Pour que le soudage ait lieu, plusieurs paramètres doivent être pris en compte, notamment l'angle de collision et la vitesse de collision. Ces deux paramètres sont liés à l'agencement relatif initial de la bobine et des deux pièces à souder, aux matériaux des pièces et au signal de courant utilisés.

Pour rappel, la vitesse de collision est la vitesse de collision radiale entre les deux pièces. On définit aussi la vitesse du point de collision qui est tangentielle aux pièces. La vitesse de collision et la vitesse du point de collision sont liées par l'angle de collision. Ces vitesse de collision et vitesse de point de collision évoluent lors de l'impact. La vitesse du point de collision peut s'élever à plusieurs milliers de m/s.

L'angle de collision est défini comme l'angle entre les parois des deux pièces lors de la collision. L'angle de collision est dynamique, c'est-à-dire qu'il évolue au cours de la collision, notamment car la pièce externe se déforme de manière non uniforme.

Il s'avère que le soudage de deux pièces, notamment tubulaires, à forte épaisseur est difficilement réalisable car les conditions nécessaires au soudage sont difficiles à remplir.

Par pièce de forte épaisseur, on entend une pièce comportant une paroi présentant une épaisseur d'au moins 3 mm.

Les pièces de forte épaisseur ne peuvent ainsi être assemblées que par sertissage, offrant des performances en termes de tenue mécanique moindre que par soudage.

### Exposé de l'invention

La présente invention vise à remédier aux inconvénients précités.

La présente invention a notamment pour but d'apporter une solution efficace permettant d'assembler des pièces, notamment tubulaires, à forte épaisseur, tout en assurant la résistance mécanique de l'article obtenu.

Des objectifs supplémentaires de l'invention sont que ce procédé est simple et rapide à mettre en œuvre.

A cet effet, il est proposé par la présente invention un procédé d'assemblage par impulsion magnétique de deux pièces tubulaires tel que défini dans la revendication 1, une pièce interne et une pièce externe, ladite pièce externe comportant une paroi annulaire présentant une surface extérieure. Le procédé comporte les étapes de :
- réduction, sur un tronçon longitudinal de la pièce externe, d'une épaisseur de la paroi annulaire de la pièce externe de telle sorte que la paroi annulaire présente une épaisseur décroissante sur ledit tronçon longitudinal,
- positionnement des deux pièces tubulaires l'une dans l'autre en formant une zone de recouvrement couvrant au moins le tronçon longitudinal,
- positionnement des deux pièces tubulaires en vis-à-vis d'une bobine, de telle sorte que le tronçon longitudinal est disposé en regard d'une partie active de ladite bobine,
- liaison des deux pièces tubulaires par impulsion magnétique.

Par pièces tubulaires, on entend que les pièces ont la forme d'un tube sur toute ou partie de leur longueur, au moins au niveau de la zone de recouvrement.

La pièce externe présente avantageusement un diamètre interne supérieur à un diamètre externe de la pièce interne.

Par partie active, on entend une zone de la bobine où se concentre et circule un courant, délivré par une unité de stockage d'énergie électrique, pour créer un champ magnétique au niveau d'une ouverture de la bobine. Une épaisseur de la partie active correspond sensiblement à l'épaisseur de peau. A haute fréquence, le courant circule sur une épaisseur réduite correspondant à l'épaisseur de peau. La fréquence mise en oeuvre dans le soudage par impulsion magnétique est de quelques dizaines de kHz, ce qui correspond par exemple, à une épaisseur de peau de quelques millimètres pour une bobine réalisée dans un matériau en acier.

La réduction de l'épaisseur de la paroi annulaire de la pièce externe est obtenue conformément à l'invention par enlèvement d'une couche de matière à partir de sa surface extérieure.

La pièce externe présente une surface intérieure sensiblement plane et une surface extérieure présentant, au niveau du tronçon longitudinal, un angle avec ladite surface intérieure de la pièce externe.

La pièce externe présente un diamètre interne sensiblement constant dans la zone de recouvrement, notamment sur le tronçon longitudinal. En d'autres termes, la paroi annulaire de la pièce externe présente ainsi une surface intérieure sensiblement parallèle à une surface extérieure d'une paroi annulaire de la pièce interne, dans la zone de recouvrement, notamment sur le tronçon longitudinal. Le positionnement des deux pièces l'une par rapport à l'autre est ainsi facilité. De plus, lors de l'étape de liaison, cette configuration (surface extérieure de la pièce interne parallèle à la surface intérieure de la pièce externe) ne provoque pas de discontinuité, notamment au niveau de l'évolution des paramètres principaux que sont l'angle et la vitesse de collision.

L'étape de liaison des deux pièces tubulaires par impulsion magnétique consiste à soumettre une zone, dite zone de travail, à un champ magnétique créé par la bobine de sorte qu'une pression s'exerce sur la paroi annulaire de la pièce externe et vient la plaquer étroitement contre une paroi annulaire de la pièce interne en provoquant leur liaison de façon permanente.

Ainsi, lorsque la zone de travail est soumise au champ magnétique généré par la bobine assurant le soudage par pression, les deux pièces tubulaires viennent s'appliquer étroitement l'une contre l'autre par mise en vitesse et déformation de la pièce tubulaire la plus proche de la bobine, en l'occurrence la pièce externe, en direction de l'autre pièce tubulaire, c'est-à-dire la pièce interne.

Lorsque la pièce interne est engagée dans la pièce externe, la surface extérieure de la paroi annulaire de la pièce interne est sensiblement parallèle à la surface intérieure de la paroi annulaire de la pièce externe. Lors de l'application d'un champ magnétique, par la bobine, sur les deux pièces tubulaires, la pression magnétique engendrée par les forces de Lorentz est sensiblement perpendiculaire à la paroi annulaire de la pièce externe, celle en vis-à-vis de la bobine. La pièce externe présentant une paroi annulaire d'épaisseur évolutive, la pression magnétique permet d'inciter la pièce externe à tourner, facilitant la création d'un angle, l'angle d'impact, entre les deux pièces tubulaires. On crée ainsi avantageusement un cadre propice à l'obtention des conditions nécessaires au soudage.

Le procédé d'assemblage selon l'invention permet par conséquent de réaliser, sur une certaine longueur, un soudage entre les deux pièces tubulaires là où l'épaisseur de la paroi annulaire de la pièce externe est faible, puis un sertissage.

La liaison obtenue entre les deux pièces tubulaires est plus résistante qu'avec un simple sertissage, sans toutefois compromettre la résistance structurale de la pièce externe.

La tenue mécanique de l'article obtenu à partir de la liaison des deux pièces tubulaires par le procédé d'assemblage est améliorée.

Selon des modes de mise en oeuvre particuliers, le procédé selon l'invention répond en outre aux caractéristiques suivantes, mises en œuvre séparément ou en chacune de leurs combinaisons techniquement opérantes.

Dans des modes de mise en œuvre particuliers de l'invention, l'épaisseur de la paroi annulaire de la pièce externe est réduite de telle sorte que l'épaisseur est monotone décroissante en direction d'une première extrémité de la pièce externe. Un tel mode de mise en œuvre permet d'une part une simplification de la fabrication de la pièce externe et d'autre part une distribution régulière des contraintes résiduelles dans la pièce externe.

Dans des modes de mise en œuvre particuliers de l'invention, l'épaisseur de la paroi annulaire de la pièce externe est réduite de telle sorte que l'épaisseur est constante sur une première portion du tronçon longitudinal, et monotone croissante sur une deuxième portion du tronçon longitudinal.

L'épaisseur de la paroi étant plus faible sur une longueur plus importante que pour les modes de mises en œuvre précédents, la longueur de soudage sera par conséquent plus importante. La tenue mécanique de l'article obtenu en est encore plus améliorée.

Par faible épaisseur, on entend une épaisseur inférieure à 3 mm.

Préférentiellement, la réduction de l'épaisseur de la paroi annulaire de la pièce externe est réalisée par usinage.

Dans des modes de mise en œuvre particuliers de l'invention, le procédé comporte une étape de formation d'au moins un motif sur une surface extérieure d'une paroi annulaire de la pièce interne, ladite étape de formation étant préalable aux étapes de positionnement.

Ledit au moins un motif est préférentiellement localisé, lorsque les deux pièces tubulaires seront disposées ultérieurement l'une dans l'autre, au niveau du tronçon longitudinal.

Ledit au moins un motif est avantageusement destiné à renforcer la liaison entre les deux pièces tubulaires, en bloquant la rotation et/ou la translation des pièces entre elles.

Dans un exemple de mise en œuvre, le au moins un motif est un motif en creux ou en relief, transversaux ou radiaux.

Préférentiellement, le au moins un motif est réalisé par usinage.

Préférentiellement, l'étape de formation du au moins un motif et l'étape de réduction d'épaisseur de la paroi annulaire de la pièce externe sont réalisées simultanément. Il en résulte un gain de temps et de coût de fabrication.

### Présentation des figures

L'invention sera mieux comprise à la lecture de la description ci-après faite en référence aux dessins annexés :
La figure 1 représente schématiquement une vue en perspective d'un dispositif d'assemblage,
La figure 2 illustre une vue en perspective d'une chape et d'un tube avant leur assemblage,
La figure 3 représente une section transversale d'une bobine annulaire du dispositif d'assemblage de la figure 1, dans laquelle sont positionnées deux pièces tubulaires, la pièce externe présentant une première forme de réalisation,
La figure 4 représente une section transversale d'une bobine annulaire du dispositif d'assemblage de la figure 1, dans laquelle sont positionnées deux pièces tubulaires, la pièce externe présentant une deuxième forme de réalisation,
La figure 5 représente une section transversale d'une bobine annulaire du dispositif d'assemblage de la figure 1, dans laquelle sont positionnées deux pièces tubulaires, la pièce externe présentant une troisième forme de réalisation,
La figure 6 représente une section transversale d'une bobine annulaire du dispositif d'assemblage de la figure 1, dans laquelle sont positionnées deux pièces tubulaires, la pièce externe présentant une quatrième forme de réalisation, et l'ouverture tubulaire de la bobine présente une variante de réalisation,
La figure 7 représente une section transversale d'une bobine annulaire du dispositif d'assemblage de la figure 1, dans laquelle sont positionnées deux pièces tubulaires, l'ouverture tubulaire de la bobine présente une variante de réalisation.

### Description détaillée d'un mode de réalisation de l'invention

L'invention est à présent décrit de manière détaillée dans le cas de l'assemblage de deux pièces tubulaires 2, 3, préférentiellement à forte épaisseur.

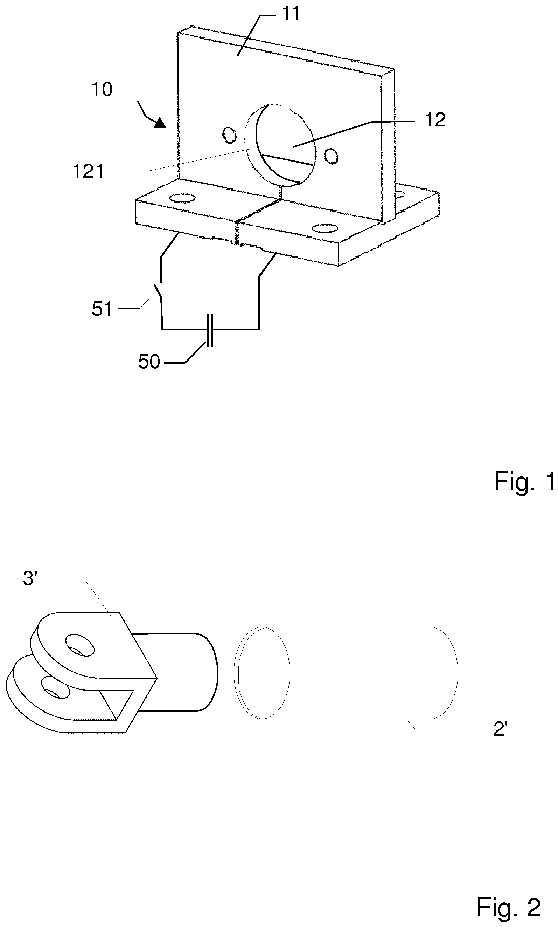

Un domaine d'application particulièrement préféré de l'invention, bien que n'en étant nullement limitatif, est le domaine automobile. Dans un exemple préféré de réalisation, l'invention est particulièrement adaptée à l'assemblage d'une pièce tubulaire 2' et d'une chape mécanique 3', comme illustré sur la figure 2.

La figure 1 décrit un dispositif d'assemblage par impulsion magnétique. Dans la suite de la description, on dénommera un tel dispositif, dispositif d'assemblage.

Le dispositif d'assemblage comporte de manière connue une bobine 10, une unité de stockage 50 et un ou plusieurs commutateurs 51.

L'unité de stockage 50 est configurée pour et destinée à emmagasiner une forte énergie, par exemple de l'ordre de quelques dizaines de kilojoules (kJ).

Dans un exemple préféré de réalisation, l'unité de stockage est une batterie de condensateurs de décharge.

La bobine 10 est quant à elle configurée pour et destinée à créer un champ magnétique concentré dans un espace délimité, décrit ultérieurement.

Le dispositif d'assemblage est destiné à recevoir les deux pièces tubulaires 2, 3 en vue de leur assemblage.

Les deux pièces tubulaires 2, 3 sont, dans la suite de la description, de section transversale circulaire. Bien que les pièces tubulaires 2, 3 soient décrites, et illustrées, de manière détaillée dans le cas d'une section transversale circulaire, d'autres formes de sections transversales, telles que carré, rectangulaire, triangulaire, ovale, peuvent s'appliquer.

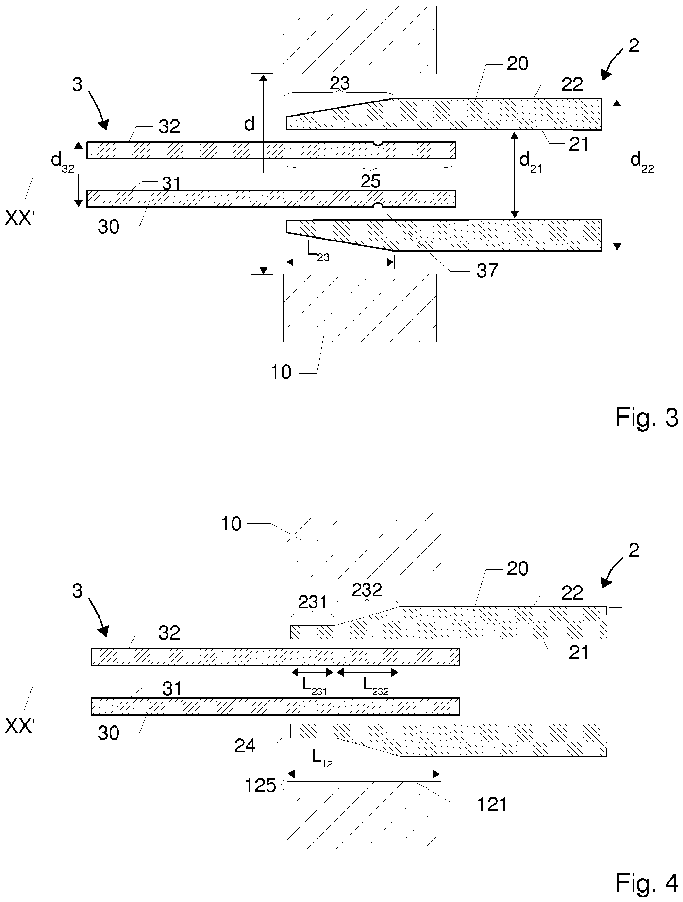

Une première pièce tubulaire, dite pièce externe 2, comporte une paroi annulaire 20 présentant une surface intérieure 21 et une surface extérieure 22, comme illustré sur les figures 3 et 4.

Une deuxième pièce tubulaire, dite pièce interne 3, comporte une paroi annulaire 30 présentant une surface intérieure 31 et une surface extérieure 32, comme également illustré sur les figures 3 à 7.

La pièce externe 2, présente un diamètre interne d₂₁ supérieur à un diamètre externe d₃₂ de la pièce interne 3, de sorte que la pièce interne 3 pénètre dans la pièce externe 2, avec un jeu.

Les deux pièces tubulaires 2, 3 sont destinées à être disposées l'une dans l'autre, de manière coaxiale, en formant, au niveau de leur superposition, une zone dite de recouvrement 25, puis à être assemblées de manière irréversible, par impulsion magnétique, au niveau de tout ou partie de ladite zone de recouvrement 25 par la bobine 10, comme il sera décrit ultérieurement.

La bobine 10 et les deux pièces tubulaires 2, 3 forment, lorsque lesdites deux pièces tubulaires sont en position au niveau de ladite bobine, un ensemble de soudage.

De préférence, la zone de recouvrement 25 est située au niveau d'une extrémité d'au moins une pièce, par exemple une extrémité de la pièce externe 2.

Les deux pièces tubulaires sont réalisées de préférence dans un matériau métallique.

Dans un exemple de réalisation, les deux pièces tubulaires sont réalisées dans le même matériau.

Dans un autre exemple de réalisation, les deux pièces tubulaires sont réalisées à partir de matériaux différents.

A titre d'exemple non limitatif de l'invention, le matériau de la pièce interne, respectivement pièce externe, peut être de l'acier ou de l'aluminium.

Dans l'exemple non limitatif où les pièces interne 3 et externe 2 sont en acier ou en aluminium, les parois annulaires de la pièce externe et de la pièce interne présentent une épaisseur supérieure à 3 mm.

Dans une variante de réalisation non représentée, lorsque la pièce externe 2 est réalisée dans un matériau présentant une très faible conductivité électrique, tel que par exemple une pièce réalisée en acier, une pièce intermédiaire, dénommée pousseur, préférentiellement tubulaire de section circulaire, est positionnée contre la surface extérieure 22 de la paroi annulaire 20 de la pièce externe 2. Cette pièce intermédiaire présente une bonne conductivité électrique.

On entend par matériau présentant une très faible conductivité électrique, un matériau dont la conductivité électrique est inférieure à 10 MS/m.

La bobine 10, de préférence une bobine annulaire, comporte, comme illustré sur la figure 1, un corps 11 dans lequel est pratiquée une ouverture tubulaire 12 délimitée par une surface dite périphérique 121. Ladite ouverture tubulaire est configurée pour recevoir les deux pièces tubulaires 2, 3 disposées l'une dans l'autre en vue de leur assemblage. En d'autres termes, l'ouverture tubulaire 12 présente une section transversale circulaire, dont le diamètre d est supérieur à un diamètre externe d₂₂ de la pièce externe 2.

Le corps 11 est réalisé dans un matériau présentant des caractéristiques spécifiques en termes, d'une part, de résistance mécanique à la déformation plastique pour y faire circuler un courant de très forte intensité, de l'ordre de quelques centaines de milliers d'Ampères et d'autre part de résistance à des températures élevées (c'est-à-dire une température de fusion élevée) pour ne pas fondre pendant le soudage.

Dans un exemple de réalisation, le matériau du corps est en acier.

La bobine 10 est reliée à l'unité de stockage d'énergie 50 et au(x) commutateur(s) 51.

En fonctionnement, lorsque le(s) commutateur(s) 51 se ferme(nt), le corps de la bobine 10 est relié à l'unité de stockage 50, et un courant de forte intensité circule dans la bobine 10 produisant un champ magnétique.

La bobine 10 est conçue pour que la densité du courant dans une zone de la bobine, soit suffisante pour satisfaire les conditions de soudage. Cette zone est appelée partie active 125. Elle est par exemple décrite dans le document WO 2012/103873.

Dans le cas d'une bobine annulaire telle que décrite dans ce mode de réalisation, le courant est concentré, dans la partie active 125, sur une couche délimitée par la surface périphérique 121 en vis à vis de la surface extérieure 22 de la pièce externe 2 et d'épaisseur correspondant à l'épaisseur de peau. Le courant génère ainsi, dans l'ouverture tubulaire 12, un champ magnétique concentré.

Dans l'exemple non limitatif d'une bobine 10 réalisée en acier, l'épaisseur de peau est de l'ordre de quelques millimètres pour une fréquence de quelques dizaines de kHz.

Un procédé d'assemblage des deux pièces tubulaires 2, 3, conforme à l'invention est à présent décrit. Le procédé d'assemblage est préférentiellement réalisé par le dispositif d'assemblage préalablement décrit.

Le procédé comprend une première étape de réduction de l'épaisseur de la paroi annulaire 20 de la pièce externe 2, sur un tronçon longitudinal 23, de longueur L₂₃.

L'épaisseur de la paroi annulaire 20 de la pièce externe 2 est réduite de sorte que la pièce externe 2 présente, sur le tronçon longitudinal 23, une paroi annulaire 20 d'épaisseur décroissante vers une première extrémité 24.

De préférence, mais de manière non limitative, le tronçon longitudinal 23 s'étend depuis la première extrémité 24 de la pièce externe 2.

Le tronçon longitudinal 23 est localisé sur la pièce externe 2, de telle sorte qu'il se situe dans la zone de recouvrement 25 des deux pièces tubulaires 2, 3, lorsque lesdites deux pièces tubulaires sont en position l'une dans l'autre, en vue de leur liaison ultérieure.

La longueur L₂₃ du tronçon longitudinal 23 est définie de sorte à être au plus égale à une longueur axiale L₁₂₁ de la surface périphérique 121 de la bobine 10.

Conformément à l'invention, et comme illustré sur les figures 3 à 7, la réduction de l'épaisseur de la paroi annulaire 20 est obtenue par enlèvement d'une couche de matière à partir de la surface extérieure 22.

Selon une autre variante de mise en œuvre, la réduction de l'épaisseur de la paroi annulaire 20 est obtenue par enlèvement d'une couche de matière à partir de la surface extérieure 22 et de la surface intérieure 21.

Ainsi une couche de matière est retirée jusqu'à ce que la paroi annulaire 20 présente, sur la longueur du tronçon longitudinal 23, une épaisseur décroissante vers la première extrémité 24.

En d'autres termes, lorsque le tronçon longitudinal commence à partir de la première extrémité 24 de la pièce externe 2, l'épaisseur de la couche enlevée est décroissante depuis la première extrémité 24, sur le tronçon longitudinal. L'épaisseur de la paroi annulaire 20 de la pièce externe 2 est, quant à elle, croissante, sur le tronçon longitudinal 23, depuis la première extrémité 24.

De préférence, l'épaisseur de la paroi annulaire 20 de la pièce externe 2, au niveau de la première extrémité 24, est réduite jusqu'à 1 mm.

Un moyen pour mettre en œuvre cette première étape consiste, par exemple, à réduire l'épaisseur de la paroi annulaire de la pièce externe par usinage.

Dans un exemple de mise en œuvre, l'épaisseur de la paroi annulaire 20 de la pièce externe 2 est réduite de telle sorte que l'épaisseur de ladite paroi annulaire 20 est monotone décroissante sur la longueur L₂₃ du tronçon longitudinal 23 vers la première extrémité 24. Dans l'illustration donnée en figure 3, sans que ce soit limitatif, l'épaisseur de la paroi annulaire 20 de la pièce externe 2 est uniquement réduite à partir de la surface extérieure 22. Aucune modification n'est apportée à la surface extérieure 32 de la paroi annulaire 30 de la pièce interne 3. Le diamètre interne d₂₁ de la pièce externe 2 reste constant sur ledit tronçon longitudinal 23.

Dans une variante de mise en œuvre, l'épaisseur de la paroi annulaire 20 de la pièce externe 2, sur la longueur du tronçon longitudinal, est réduite de telle sorte que :
- sur une première portion 231 du tronçon longitudinal 23, l'épaisseur de ladite paroi annulaire 20 est constante,
- sur une deuxième portion 232 du tronçon longitudinal, l'épaisseur de ladite paroi annulaire 20 de la pièce externe est monotone croissante.

Dans l'illustration donnée en figure 4, sans que ce soit limitatif, l'épaisseur de la paroi annulaire 20 de la pièce externe 2 est uniquement réduite à partir de la surface extérieure 22. Aucune modification n'est apportée à la surface extérieure 32 de la paroi annulaire 30 de la pièce interne 3. Le diamètre interne d₂₁ de la pièce externe 2 reste sensiblement constant dans la zone de recouvrement, notamment sur ledit tronçon longitudinal 23.

La première portion 231 est située du coté de la première extrémité 24 de la pièce externe 2.

La première portion 231 et la deuxième portion 232 sont préférentiellement successives. La première portion s'étend sur une longueur L₂₃₁. La deuxième portion s'étend sur une longueur L₂₃₂.

Dans une autre variante de mise en œuvre, l'épaisseur de la paroi annulaire 20 de la pièce externe 2, sur la longueur du tronçon longitudinal 23, est réduite de telle sorte que :
- sur une première portion 233 du tronçon longitudinal 23, l'épaisseur de ladite paroi annulaire 20 est monotone décroissante,
- sur une deuxième portion 234 du tronçon longitudinal 23, l'épaisseur de ladite paroi annulaire 20 de la pièce externe est monotone croissante.

La première portion 233 et la deuxième portion 234 sont préférentiellement successives.

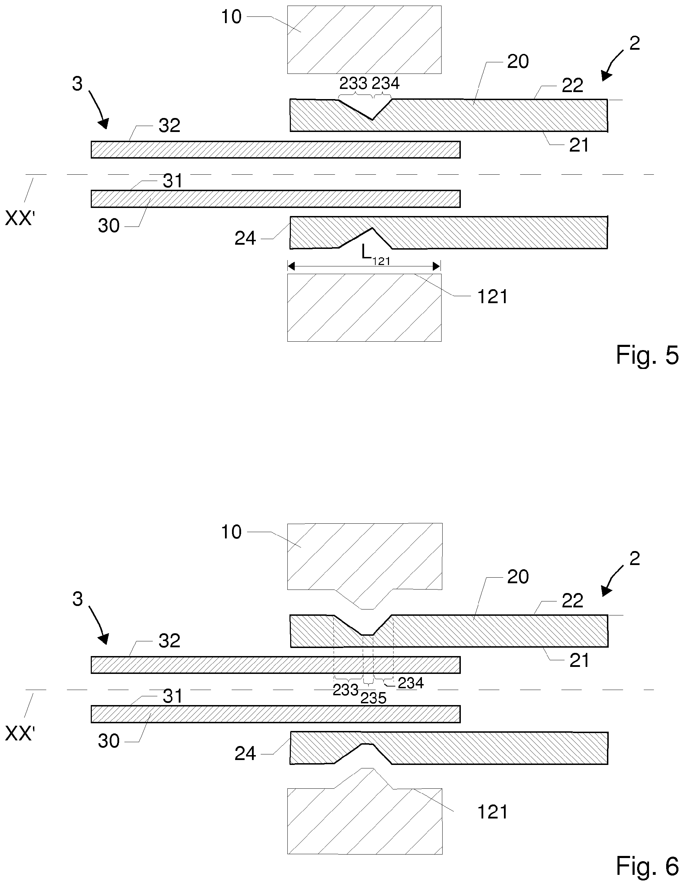

Dans l'illustration donnée en figure 5, sans que ce soit limitatif, le tronçon longitudinal 23 ne débute pas au niveau de la première extrémité 24 de la pièce externe 2.

Dans l'illustration donnée en figure 5, sans que ce soit limitatif, l'épaisseur de la paroi annulaire 20 de la pièce externe 2 est uniquement réduite à partir de la surface extérieure 22. Aucune modification n'est apportée à la surface extérieure 32 de la paroi annulaire 30 de la pièce interne 3. Le diamètre interne d₂₁ de la pièce externe 2 reste sensiblement constant dans la zone de recouvrement, notamment sur ledit tronçon longitudinal 23.

Dans une autre variante de mise en œuvre, l'épaisseur de la paroi annulaire 20 de la pièce externe 2, sur la longueur du tronçon longitudinal 23, est réduite de telle sorte que :
- sur une première portion 233 du tronçon longitudinal 23, l'épaisseur de ladite paroi annulaire 20 est monotone décroissante,
- sur une deuxième portion 234 du tronçon longitudinal 23, l'épaisseur de ladite paroi annulaire 20 de la pièce externe est monotone croissante,
- dans une troisième portion 235 du tronçon longitudinal 23, située entre la première portion et la deuxième portion, l'épaisseur de ladite paroi annulaire 20 de la pièce externe est constante.

Dans l'illustration donnée en figure 6, sans que ce soit limitatif, le tronçon longitudinal 23 ne débute pas au niveau de la première extrémité 24 de la pièce externe 2.

Dans l'illustration donnée en figure 6, sans que ce soit limitatif, l'épaisseur de la paroi annulaire 20 de la pièce externe 2 est uniquement réduite à partir de la surface extérieure 22. Aucune modification n'est apportée à la surface extérieure 32 de la paroi annulaire 30 de la pièce interne 3. Le diamètre interne d₂₁ de la pièce externe 2 reste sensiblement constant dans la zone de recouvrement, notamment sur ledit tronçon longitudinal 23.

Dans un mode particulier de mise en œuvre du procédé, le procédé peut comporter une étape supplémentaire de formation, sur la surface extérieure 32 de la paroi annulaire 30 de la pièce interne 3, d'au moins un motif 37.

Le au moins un motif 37 est destiné à renforcer la liaison des deux pièces tubulaires 2, 3 entres elles, une fois celle-ci assemblées.

Le au moins un motif 37 est localisé sur la pièce interne 3, de telle sorte qu'il se situe dans la zone de recouvrement 25 des deux pièces tubulaires 2, 3, lorsque lesdites deux pièces tubulaires sont en position l'une dans l'autre, en vue de leur liaison ultérieure. De préférence, ledit au moins un motif 37 est situé au niveau du tronçon longitudinal, lorsque lesdites deux pièces tubulaires sont en position l'une dans l'autre, en vue de leur liaison ultérieure.

Le au moins un motif 37 peut se présenter sous la forme d'un motif en relief ou d'un motif en creux.

Un motif en relief peut se présenter sous la forme d'une protubérance radiale, d'un renflement, par exemple périphérique ou longitudinal, s'étendant depuis la surface extérieure 32 de la paroi annulaire 30 de la pièce interne 3, et faisant saillie vers l'extérieur de la paroi annulaire 30.

Un motif en creux peut se présenter sous la forme d'un évidement borgne radial, d'une gorge, par exemple périphérique (comme illustré sur la figure 3) ou longitudinale, s'étendant dans l'épaisseur de la paroi annulaire 30.

Un moyen pour concevoir ce motif en creux consiste, par exemple, à réaliser l'évidement ou la gorge, par usinage de la surface extérieure 32 de la paroi annulaire 30 de la pièce interne 3.

La pièce interne 3 peut également comporter une pluralité de motifs, de forme identique ou différente.

L'ordre de mise en œuvre de la première étape et de l'étape supplémentaire n'est pas imposé et, suivant le procédé, peuvent être réalisées dans l'ordre inverse de l'ordre décrit ou réalisée simultanément sans modifier le résultat desdites étapes.

Le procédé comprend ensuite une étape de positionnement, dans la bobine 10, des pièces tubulaires 2, 3.

Dans une première phase, les deux pièces tubulaires cylindriques sont positionnées l'une dans l'autre en formant la zone de recouvrement 25.

La pièce interne 3 est engagée dans la pièce externe 2 de sorte que la zone de recouvrement couvre au moins le tronçon longitudinal 23 de la pièce externe 2 et le au moins un motif 37 de la pièce interne 3.

Dans une deuxième phase, les deux pièces tubulaires 2, 3 sont positionnées dans l'ouverture tubulaire 12 de la bobine 10.

Les pièces interne 3 et externe 2 sont avantageusement disposées dans ladite bobine de telle sorte que tout ou partie de la zone de recouvrement 25 est en vis-à-vis de la surface périphérique 121 de la bobine.

Plus particulièrement, les pièces interne 3 et externe 2 sont disposées dans l'ouverture tubulaire 12 de la bobine 10 de sorte que le tronçon longitudinal 23 de la pièce externe 2 est placé en vis-à-vis de la partie active 125 de la bobine.

La zone de recouvrement 25 en vis-à-vis de la partie active 125 est dénommée zone de travail. Ladite zone de travail présente une longueur prédéfinie, dite longueur de travail. Cette longueur de travail correspond à une longueur de soudage maximale entre la pièce interne et la pièce externe. En pratique, la longueur de soudage est sensiblement inférieure à cette longueur de travail.

Les pièces interne 3 et externe 2 sont maintenues, dans l'ouverture tubulaire 12, de manière coaxiale entre elles, selon une direction axiale XX' et avec l'ouverture tubulaire 12 de la bobine 10, allongée selon ladite direction axiale XX', par des moyens de fixation (non représentés sur les figures).

Dans un exemple préféré de mise en œuvre, lorsque le tronçon longitudinal 23 commence à partir de la première extrémité 24, la pièce externe 2 est positionnée de sorte que sa première extrémité 24 est placée en vis-à-vis de la surface périphérique 121.

L'ordre de mise en œuvre des deux phases n'est pas imposé et, suivant le procédé, peuvent être réalisées dans l'ordre inverse de l'ordre décrit ou réalisée simultanément sans modifier le résultat desdites étapes.

A l'issue de cette deuxième étape, les deux pièces tubulaires 2, 3 sont positionnées entre elles et dans la bobine 10.

Lorsque la réduction de l'épaisseur de la paroi annulaire 20 de la pièce externe 2 est obtenue par enlèvement d'une couche de matière à partir de la surface extérieure 22, la surface extérieure 32 de la pièce interne 3 est sensiblement parallèle à la surface intérieure 21 de la pièce externe 2, comme illustré sur les figures 3 et 4. La surface extérieure 22 de la pièce externe 2 présente, en partie, un angle avec la surface périphérique 121 de la bobine 10.

Le procédé comporte ensuite une étape de liaison des deux pièces par impulsion magnétique.

La zone de travail est soumise à un champ magnétique provenant de la partie active 125 de la bobine 10 de sorte qu'une pression s'exerce sur la surface extérieure 22 de la paroi annulaire 20 de la pièce externe 2, ou sur une surface extérieure du pousseur lorsque ledit pousseur est nécessaire, et vient la plaquer étroitement contre la surface extérieure 32 de la paroi annulaire 30 de la pièce interne 3 en provoquant leur liaison de façon permanente.

Lorsque la paroi annulaire 20 de la pièce externe 2 présente, sur la longueur L₂₃ du tronçon longitudinal 23, une épaisseur monotone croissante, comme illustré sur la figure 3, les pièces interne 3 et externe 2 sont soudées sur une première longueur, dite longueur de soudage, là où l'épaisseur de la paroi annulaire de la pièce externe est faible, puis sertie sur une deuxième longueur, dite longueur de sertissage.

Lorsque la paroi annulaire 20 de la pièce externe 2 présente, sur la longueur L₂₃ du tronçon longitudinal 23, une épaisseur constante puis une épaisseur croissante, comme illustré sur la figure 4, les pièces interne 3 et externe 2 sont soudées sur une plus grande longueur, car l'épaisseur de la paroi annulaire de la pièce externe est plus faible sur une longueur plus importante, puis sertie.

La longueur de soudage et du sertissage est dépendant de la longueur axiale de la bobine 10 et de l'énergie mis en œuvre.

Lorsque la pièce interne 3, quelque soit la forme de la pièce externe 2 au niveau du tronçon longitudinal 23, comporte au moins un motif 37 sur sa surface extérieure 32, préférentiellement situé au niveau de la longueur de sertissage, ledit au moins un motif permet avantageusement de rigidifier localement la liaison entre les pièces tubulaires, d'augmenter la surface de contact entre les deux pièces tubulaires 2, 3 et d'améliorer la tenue en traction de la liaison entre lesdites deux pièces tubulaires.

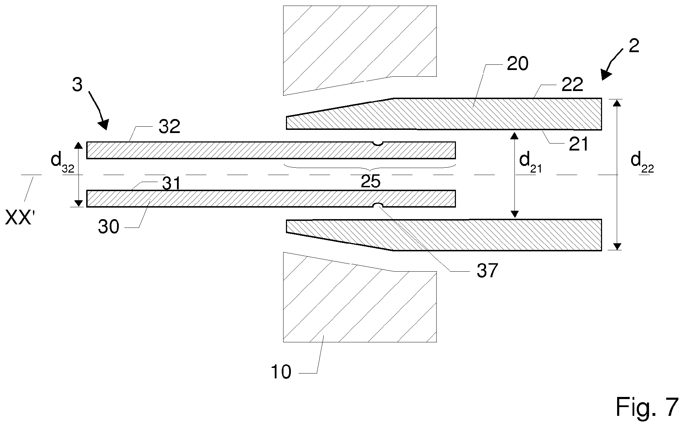

Dans un mode alternatif de réalisation de la bobine, comme illustré sur les figures 6 et 7, l'ouverture tubulaire 12 de la bobine 10 peut présenter une forme complémentaire à la surface extérieure 22 de la paroi annulaire 20 de la pièce externe 2, après réduction en épaisseur de ladite pièce externe sur le tronçon longitudinal 23.

Une telle forme de l'ouverture tubulaire permet à la bobine de présenter une section transversale circulaire dont le diamètre est évolutif. Ainsi, au niveau du tronçon longitudinal où la pièce externe présente l'épaisseur la plus faible, l'ouverture tubulaire de la bobine présente le diamètre le plus faible. Dans une telle configuration, le courant est concentré dans cette zone de diamètre réduit, ce qui permet d'améliorer les performances de l'impulsion magnétique et donc de faciliter le soudage dans ladite zone.

L'article obtenu à l'issue du procédé d'assemblage, tel que par exemple une colonne de direction d'un véhicule automobile, comporte les deux pièces tubulaires 2, 3 liées entre elles par une partie soudée puis une partie sertie jointe.

La description ci-avant illustre clairement que par ses différentes caractéristiques et leurs avantages, la présente invention atteint les objectifs qu'elle s'était fixés. En particulier, elle fournit un procédé d'assemblage par impulsion magnétique adapté à lier des pièces à forte épaisseur.

Le procédé permet d'obtenir une liaison plus résistante qu'avec un simple sertissage, sans toutefois compromettre la résistance structurale de la pièce externe.

## Revendications

1. Procédé d'assemblage par impulsion magnétique de deux pièces tubulaires (2, 3), une pièce interne (3) et une pièce externe (2), ladite pièce externe comportant une paroi annulaire (20) présentant une surface extérieure (22), ladite pièce externe (2) présentant un diamètre interne (d₂₁) supérieur à un diamètre externe (d₃₂) de la pièce interne (3),
**caractérisé en ce que** le procédé comporte les étapes de :
- réduction, sur un tronçon longitudinal (23) de la pièce externe (2), d'une épaisseur de la paroi annulaire (20) de la pièce externe (2) de telle sorte que la paroi annulaire (20) présente une épaisseur décroissante sur ledit tronçon longitudinal, la réduction de l'épaisseur de la paroi annulaire (20) de la pièce externe (2) étant obtenue par enlèvement d'une couche de matière à partir de sa surface extérieure (22),
- positionnement des deux pièces tubulaires (2, 3) l'une dans l'autre en formant une zone de recouvrement (25) couvrant au moins le tronçon longitudinal (23),
- positionnement des deux pièces tubulaires (2, 3) en vis-à-vis d'une bobine (10), de telle sorte que le tronçon longitudinal (23) est disposé en regard d'une partie active (125) de ladite bobine,
- liaison des deux pièces tubulaires (2,3) par impulsion magnétique.

2. Procédé d'assemblage selon la revendication 1 dans lequel l'épaisseur de la paroi annulaire (20) de la pièce externe (2) est réduite de telle sorte que l'épaisseur est monotone décroissante en direction d'une première extrémité (24) de la pièce externe (2).

3. Procédé d'assemblage selon la revendication 1 dans lequel l'épaisseur de la paroi annulaire (20) de la pièce externe (2) est réduite de telle sorte que l'épaisseur est constante sur une première portion (231) du tronçon longitudinal (23), et monotone croissante sur une deuxième portion (232) du tronçon longitudinal (23).

4. Procédé d'assemblage selon l'une des revendications 1 à 3 dans lequel la réduction de l'épaisseur de la paroi annulaire (20) de la pièce externe (2) est obtenue par enlèvement d'une couche de matière à partir d'une surface intérieure (21) de ladite pièce externe.

5. Procédé d'assemblage selon l'une des revendications précédentes dans lequel la réduction de l'épaisseur de la paroi annulaire (20) de la pièce externe (2) est réalisée par usinage.

6. Procédé d'assemblage selon l'une des revendications précédentes comportant une étape de formation d'au moins un motif (37) sur une surface extérieure (32) d'une paroi annulaire (30) de la pièce interne (3), ladite étape de formation étant préalable aux étapes de positionnement.

7. Procédé d'assemblage selon la revendication 6 dans lequel le au moins un motif (37) est réalisé par usinage.

8. Procédé d'assemblage selon l'une des revendications 6 ou 7 dans lequel l'étape de formation du au moins un motif (37) et l'étape de réduction d'épaisseur de la paroi annulaire (20) de la pièce externe (2) sont réalisées simultanément.

## Patentansprüche

1. Verfahren zum Verbinden durch magnetische Impulse von zwei rohrförmigen Teilen (2, 3), eines inneren Teils (3) und eines äußeren Teils (2), wobei das äußere Teil eine ringförmige Wand (20) aufweist, die eine äußere Fläche (22) aufweist, wobei das äußere Teil (2) einen Innendurchmesser (d₂₁) aufweist, der größer als ein Außendurchmesser (d₃₂) des inneren Teils (3) ist,
**dadurch gekennzeichnet, dass** das Verfahren die Schritte umfasst:
- Reduzieren, auf einem Längsabschnitt (23) des äußeren Teils (2), einer Stärke der ringförmigen Wand (20) des äußeren Teils (2) derart, dass die ringförmige Wand (20) eine abnehmende Stärke auf dem Längsabschnitt aufweist, wobei die Reduzierung der Stärke der ringförmigen Wand (20) des äußeren Teils (2) durch Abtragen einer Materialschicht ab seiner äußeren Fläche (22) aufweist,
- Positionieren der zwei rohrförmigen Teile (2, 3) ineinander durch Bilden einer Überlappungszone (25), die mindestens den Längsabschnitt (23) bedeckt,
- Positionieren der zwei rohrförmigen Teile (2, 3) gegenüber einer Spule (10), so dass der Längsabschnitt (23) einem aktiven Teil (125) der Spule zugewandt angeordnet ist,
- Verbinden der zwei rohrförmigen Teile (2, 3) durch magnetische Impulse.

2. Verbindungsverfahren nach Anspruch 1, wobei die Stärke der ringförmigen Wand (20) des äußeren Teils (2) derart reduziert wird, dass die Stärke in Richtung eines ersten Endes (24) des äußeren Teils (2) monoton abnehmend ist.

3. Verbindungsverfahren nach Anspruch 1, wobei die Stärke der ringförmigen Wand (20) des äußeren Teils (2) derart reduziert wird, dass die Stärke über ein erstes Teilstück (231) des Längsabschnitts (23) konstant und über ein zweites Teilstück (232) des Längsabschnitt (23) monoton zunehmend ist.

4. Verbindungsverfahren nach einem der Ansprüche 1 bis 3, wobei die Reduzierung der Stärke der ringförmigen Wand (20) des äußeren Teils (2) durch Abtragen einer Materialschicht ab einer inneren Fläche (21) des äußeren Teils erhalten wird.

5. Verbindungsverfahren nach einem der vorangehenden Ansprüche, wobei die Reduzierung der Stärke der ringförmigen Wand (20) des äußeren Teils (2) durch Bearbeiten durchgeführt wird.

6. Verbindungsverfahren nach einem der vorangehenden Ansprüche, aufweisend einen Bildungsschnitt mindestens eines Motivs (37) auf einer äußeren Fläche (32) einer ringförmigen Wand (30) des inneren Teils (3), wobei der Bildungsschritt vor den Positionierungsschritten erfolgt.

7. Verbindungsverfahren nach Anspruch 6, wobei das mindestens eine Motiv (37) durch Bearbeiten hergestellt wird.

8. Verbindungsverfahren nach einem der Ansprüche 6 oder 7, wobei der Bildungsschritt des mindestens einen Motivs (37) und der Reduzierungsschritt der Stärke der ringförmigen Wand (20) des äußeren Teils (2) gleichzeitig durchgeführt werden.

## Claims

1. Magnetic pulse method for joining two tubular parts (2, 3), an internal part (3) and an external part (2), with said external part comprising an annular wall (20) having an outer surface (22), with said external part (2) having an inner diameter (d₂₁) greater than an outer diameter (d₃₂) of the internal part (3),
**characterised in that** the method comprises the steps of:
- reduction, on a longitudinal portion (23) of the external part (2), of a thickness of the annular wall (20) of the external part (2) such that the annular wall (20) has a decreasing thickness on said longitudinal portion, with the thickness of the annular wall (20) of the external part (2) being reduced by removing a layer of material from its outer surface (22),
- positioning of the two tubular parts (2, 3) one inside the other, forming an overlap region (25) that at least covers the longitudinal portion (23),
- positioning of the two tubular parts (2, 3) opposite a coil (10), such that the longitudinal portion (23) is arranged opposite an active part (125) of said coil,
- connection of the two tubular parts (2,3) by magnetic pulses.

2. Joining method according to claim 1, wherein the thickness of the annular wall (20) of the external part (2) is reduced such that the thickness is monotonically decreasing towards a first end (24) of the external part (2).

3. Joining method according to claim 1, wherein the thickness of the annular wall (20) of the external part (2) is reduced such that the thickness is constant over a first portion (231) of the longitudinal portion (23), and is monotonically increasing on a second portion (232) of the longitudinal portion (23).

4. Joining method according to one of claims 1 to 3, wherein the thickness of the annular wall (20) of the external part (2) is reduced by removing a layer of material from an inner surface (21) of said external part.

5. Joining method according to one of the preceding claims, wherein the thickness of the annular wall (20) of the external part (2) is reduced by machining.

6. Joining method according to one of the preceding claims, comprising a step of forming at least one pattern (37) on an outer surface (32) of an annular wall (30) of the internal part (3), with said forming step being carried out prior to the positioning steps.

7. Joining method according to claim 6, wherein the at least one pattern (37) is produced by machining.

8. Joining method according to one of claims 6 or 7, wherein the step of forming the at least one pattern (37) and the thickness reduction step of the annular wall (20) of the external part (2) are carried out simultaneously.
